Europäisches Patentamt

(19) European Patent Office     (11) Numéro de publication: **0 195 703**

Office européen des brevets     **B1**

(12)     **FASCICULE DE BREVET EUROPÉEN**

(45) Date de publication du fascicule du brevet: 23.11.88

(51) Int. Cl.⁴: **F 24 F 3/16,** B 01 L 1/04, B 08 B 15/02, A 61 G 10/00

(21) Numéro de dépôt: **86400436.1**

(22) Date de dépôt: **28.02.86**

(54) **Installation pour travaux hors poussière, notamment pour la fabrication et le contrôle de composants électroniques,et son procédé de mise en oeuvre.**

(30) Priorité: **08.03.85 FR 8503432**

(43) Date de publication de la demande: **24.09.86 Bulletin 86/39**

(45) Mention de la délivrance du brevet: **23.11.88 Bulletin 88/47**

(84) Etats contractants désignés: **BE CH DE FR GB IT LI**

(56) Documents cité:
**WO-A-82/03114**
**FR-A-2 130 721**
**GB-A-2 050 841**
**US-A-4 111 753**

(73) Titulaire: **SOCIETE NOUVELLE D'EXPLOITATION DE LA CALHENE"S.N.E.L.C.", 1, rue du Petit Clamart, F-78140 Velizy (FR)**

(72) Inventeur: **Lepissier, Jean- Jacques, 14, rue de Gascogne, F-41100 Vendôme (FR)**
Inventeur: **Picard, Claude, 2, rue Zilina, F-92000 Nanterre (FR)**
Inventeur: **Saint- Martin, Bernard, 6, rue Leclerc, F-75014 Paris (FR)**

(74) Mandataire: **Pottier, Pierre Société BREVATOME, 25, Rue de Ponthieu, F-75008 Paris (FR)**

EP 0 195 703 B1

LIBER, STOCKHOLM 1988

## Description

L'invention concerne une installation destinée essentiellement à effectuer des travaux hors poussière et, notamment la fabrication et le contrôle de composants électroniques tels que des microprocesseurs. L'invention a également pour objet un procédé de mise en oeuvre d'une telle installation.

On sait que les microprocesseurs sont fabriqués à partir d'un disque de silicium, sur lequel on effectue successivement différentes opérations afin de réaliser, sur chaque disque, plusieurs microprocesseurs qui sont ensuite séparés, puis contrôlés individuellement. Actuellement, sur un disque d'environ 100 mm de diamètre, on réalise des microprocesseurs dont les dimensions sont d'environ 5 mm x 5 mm, chaque composant comportant approximativement 2 000 contacts électriques.

Ces quelques données numériques font apparaître immédiatement la nécessité de réaliser les différentes opérations relatives à la fabrication, puis au contrôle des microprocesseurs dans une atmosphère présentant une quantité de poussières et de particules en suspension aussi faible que possible.

Actuellement, toutes ces opérations sont effectuées dans des salles, dites "salles blanches", munies de portes et dans lesquelles le personnel pénètre sans autre précaution que l'emploi éventuel de vêtements particuliers produisant peu de poussières. L'atmosphère entourant chacun des postes est purifiée en faisant circuler en permanence de l'air neuf délivré par des hottes à flux laminaire surplombant chaque poste de travail. Pour une efficacité donnée des filtres utilisés (actuellement 99,999 %), il est clair que le débit important (environ 1 200 à 1 800 m³ d'air par heure) imposé par le flux laminaire conduit à introduire de nombreuses poussières dans la salle de travail. Ces conditions permettent de travailler en "classe 100", c'est-à-dire dans un environnement contenant 100 particules de section supérieure ou égale à 0,3 micron par pied cube (ou pour environ 28 titres d'air).

La fabrication des microprocesseurs dans les salles blanches existantes travaillant en classe 100 conduit à un rebut minimum de 40 % des composants réalisés. Pour l'essentiel, ce rebut est dû à la présence de contacts défectueux provenant de poussières collées sur ces contacts.

Il apparaît immédiatement que l'existence d'une installation permettant de travailler en "classe 10" et même en-dessous, c'est-à-dire dans un environnement contenant au plus 10 particules de section supérieure ou égale à 0,3 micron par pied cube, conduirait à une réduction importante du rebut des microprocesseurs fabriqués dans les conditions exposées précédemment.

De plus, l'existence d'une telle installation s'avère pratiquement indispensable si l'on désire modifier les conditions de fabrication des microprocesseurs en augmentant les dimensions du disque de silicium servant de substrat, pour utiliser par exemple des disques d'environ 150 mm de diamètre sur lesquels seraient fabriqués un plus grand nombre de microprocesseurs, ceux-ci présentant en outre des dimensions et un nombre de contacts sensiblement plus grands. En effet, ces nouvelles conditions de fabrication conduiraient, si elles étaient appliquées aux salles blanches existantes, à des taux de rejet inacceptables.

Dans le domaine biologique le document US-A 4 111 753 montre qu'il est connu d'utiliser une installation comprenant un isolateur étanche équipé de gants de manutention et un conteneur de tranfert apte à être raccordé à isolateur par un dispositif de transfert étanche.

Cependant, il n'existe pas actuellement d'installation pour la fabrication et le contrôle de composants électroniques permettant de travailler en classe 10 ou en-dessous.

La présente invention a précisément pour objet une installation répondant à cet objectif d'une manière particulièrement simple et efficace, à la fois grâce à l'utilistion d'un isolateur enfermant un volume clos dans lequel le personnel ne pénètre pas physiquement et qui n'est jamais ouvert sur l'extérieur, et en limitant le débit d'entrée de l'air neuf au travers des filtres à une valeur aussi faible que possible, afin que, pour une efficacité donnée des filtres, la quantité de poussières introduite dans l'isolateur soit aussi faible que possible.

De façon plus précise, il est proposé conformément à l'invention une installation pour travaux hors poussière, comprenant:

- un isolateur étanche dont la paroi enferme un volume clos de travail et comportant des moyens d'intervention à l'intérieur dudit volume sans rupture de ladite paroi;
- au moins un conteneur étanche distinct de l'isolateur et pouvant être raccordé et mis en communication avec ce dernier au moyen d'un dispositif de transfert étanche, afin d'introduire et d'extraire de l'isolateur des produits et matériels;
caractérisée en ce qu'elle comprend:
- un circuit fermé d'épuration particulaire de l'isolateur débouchant dans ce dernier et comportant des moyens de ventilation à fort débit et des moyens de filtrage;
- un circuit fermé d'épuration particulaire du conteneur débouchant dans ce dernier et comportant des moyens de ventilation et des moyens de filtrage ;
- un circuit ouvert d'admission d'air neuf dans l'isolateur, comportant une conduite d'entrée équipée de moyens de ventilation à faible débit et de moyens de filtration et une conduite de sortie équipée de moyens de filtration, les conduites d'entrée et de sortie communiquant à la fois avec l'isolateur et avec l'extérieur.

Dans une telle installation, le caractère étanche de l'isolateur permet, après un nettoyage des particules en suspension réalisé au moyen du circuit fermé de dépoussiérage de l'isolateur, suivi d'un lavage des surfaces internes de ce dernier et des surfaces des appareils qu'il contient visant à éliminer les poussières fixées sur les parois, de travailler dans un volume clos pratiquement exempt de poussières.

Lors de l'exécution des tâches, cette propreté est préservée puisque le personnel reste à l'extérieur de l'isolateur et intervient grâce à des gants ou à des demi-scaphandres faisant partie intégrante de la paroi de l'isolateur. De plus, le matériel et les produits qui doivent être soit introduits dans l'isolateur, soit extraits de celui-ci, le sont au moyen d'un conteneur équipé de son propre circuit de nettoyage, au travers d'un dispositif de transfert étanche.

En cours de travail, l'introduction d'air neuf dans l'isolateur est donc limité au seul renouvellement nécessité par exemple par des variations du volume de travail inhérentes à l'exécution des tâches. Par conséquent, le débit du circuit ouvert d'admission d'air neuf, de préférence variable, est toujours très faible et compris, selon les travaux, entre 0 et 20 m3/heure. Les filtres à haute efficacité existant actuellement ayant une efficacité de 99,999 %, on réduit ainsi considérablement le nombre de particules introduites en cours de travail, par rapport aux installations existantes utilisant des hottes à flux laminaire nécessitant un fort débit (entre 1 200 et 1 800 m3 d'air à l'heure).

De plus, le faible débit du circuit ouvert d'admission d'air neuf selon l'invention permet de placer deux filtres à haute efficacité en série dans la conduite d'entrée, ce qui réduit encore très sensiblement l'introduction de poussières dans l'isolateur. Il est à noter que, dans les installations existantes à flux laminaire, cela nécessiterait une dépense d'énergie considérable, compte tenu de la perte de charge des filtres et du fort débit nécessaire au flux laminaire.

Selon un aspect intéressant de l'invention, le circuit fermé d'épuration particulaire de l'isolateur débouche dans ce dernier par deux ouvertures en vis-à-vis placées de part et d'autre d'une zone de travail interne audit volume clos, ces deux ouvertures ayant une section approximativement identique assurant un balayage laminaire de ladite zone de travail.

De préférence, les moyens de filtration équipant le circuit fermé d'épuration particulaire de l'isolateur comprennent un filtre à haute efficacité de forte section placé dans une partie de ce circuit qui débouche dans l'isolateur, en aval des moyens de ventilation équipant ce circuit.

Le circuit d'épuration particulaire de l'isolateur étant fermé, il peut être maintenu en fonctionnement en cours de travail, car le filtre reçoit alors l'air dépoussiéré contenu dans l'isolateur, de sorte que la probabilité pour qu'il laisse passer des poussières est pratiquement nulle. Cela peut permettre de parfaire la propreté du volume clos, dans lequel des particules peuvent être libérées par les parois de l'isolateur et par le matériel en cours de travail, et aussi de traiter l'atmosphère contenue dans ce volume, par exemple pour en réguler la température, évacuer des vapeurs, ou travailler sous atmosphère neutre, sèche, etc... en plaçant des moyens de traitement dans ce circuit fermé.

Selon un autre aspect de l'invention, l'épuration particulaire de l'air contenu dans l'isolateur peut être améliorée en réalisant celui-ci à l'aide d'une paroi souple pouvant être déformée afin de réduire le volume clos lors de l'opération d'épuration particulaire.

L'invention a également pour objet un procédé de mise en oeuvre d'une telle installation, comprenant les étapes successives suivantes

- épuration particulaire rapide du volume clos de travail enfermé dans l'isolateur par l'actionnement des moyens de ventilation à fort débit équipant le circuit fermé d'épuration particulaire de l'isolateur, assurant la fixation des poussières contenues dans ledit volume sur les moyens de filtration équipant ce circuit;

- lavage des surfaces internes des parois de l'isolateur et des surfaces des matériels contenus dans ce dernier;

- exécution des travaux à réaliser à l'intérieur de l'isolateur, avec ventilation de celui-ci par l'actionnement des moyens de ventilation à faible débit équipant le circuit ouvert d'admission d'air neuf.

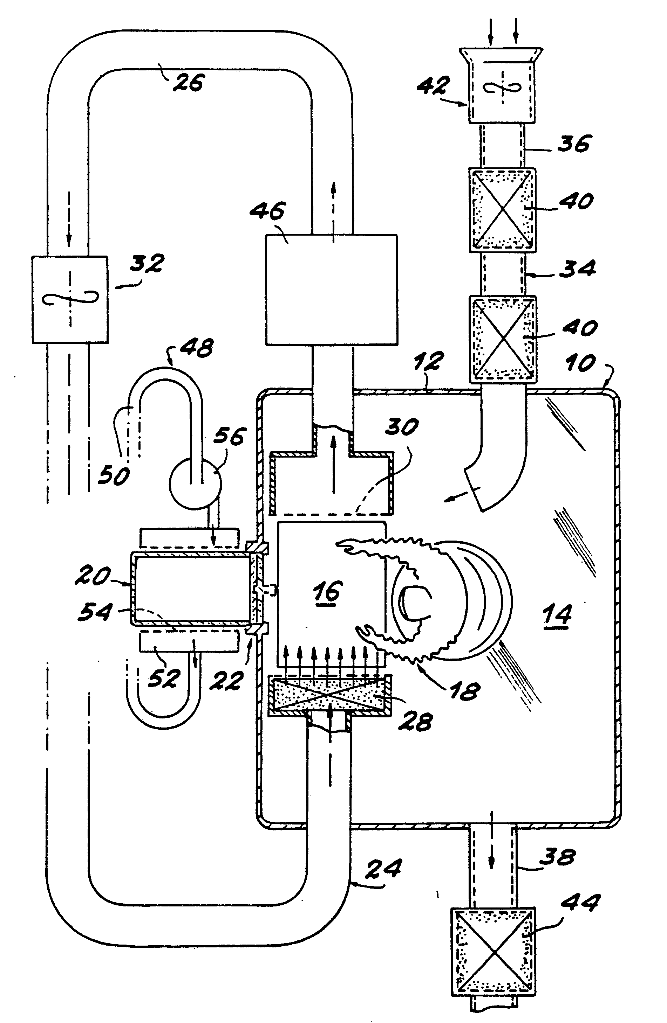

On décrira maintenant, à titre d'exemple non limitatif, un mode de réalisation préféré de l'invention en se référant au dessin annexé dans lequel la figure unique représente de façon très schématique une installation pour travaux hors poussière conforme à l'invention.

L'installation représentée sur la figure est destinée plus précisément à la réalisation de l'une des opérations nécessaires à la fabrication et au contrôle d'un microprocesseur. Une installation comparable est utilisée à chacun des postes de travail correspondant à l'exécution des autres opérations de fabrication et de contrôle.

On comprendra aisément que cette application n'est pas limitative, une installation de ce type pouvant être utilisée pour la fabrication et le contrôle de tout autre composant électronique et, plus généralement, pour l'exécution de tous travaux devant être réalisés hors poussière. Ainsi, dans le domaine de l'industrie pharmaceutique, une telle installation peut être utilisée pour la fabrication et le conditionnement de solutés injectables.

L'installation selon l'invention comprend un isolateur étanche 10 dont la paroi 12 enferme un volume clos 14 à l'intérieur duquel doit être effectuée l'opération citée précédemment.

Cette opération s'effectue sur un plan de travail 16, par exemple à l'aide d'un appareil ou d'une machine (non représenté).

Le manipulateur devant effectuer cette opération intervient conformément à l'invention sans pénétrer physiquement à l'intérieur de l'enceinte. A cet effet, on dispose de moyens d'intervention tels qu'un demi-scaphandre 18 ou qu'une paire de gants invaginés dans la paroi 12 de l'isolateur, de façon à faire partie intégrante de cette paroi. Des moyens de manipulation à distance tels qu'un télémanipulateur maître-esclave pourraient également permettre d'effectuer l'intervention souhaitée, sans rompre l'étanchéité de l'isolateur 10.

Afin de préserver l'étanchéité de l'isolateur lors de l'introduction ou de l'extraction d'un appareil ou simplement de pièces (disques de silicium dans le cas des microprocesseurs) sur lesquels on désire travailler, on dispose d'au moins un conteneur 20 également étanche et pouvant être à volonté séparé de l'isolateur 10 ou

0 195 703

au contraire raccordé sur la paroi 12 de celui-ci, afin de pouvoir communiquer avec le volume 14 sans rompre l'étanchéité vis-à-vis de l'extérieur. Le raccordement du conteneur sur l'isolateur s'effectue au moyen d'un dispositif de raccordement étanche 22 de type connu. Ce dispositif peut notamment être le dispositif de transfert étanche à double porte décrit dans le FR-A-2 137 106.

Avant que le travail ne puisse être réalisé dans l'isolateur 10, il est nécessaire de préparer celui-ci pour que les particules en suspension ainsi que les particules fixées sur les parois et sur les appareils soient éliminées.

L'élimination des poussières en suspension dans l'atmosphère contenue dans le volume clos 14 s'effectue au moyen d'un circuit fermé d'épuration particulaire 24.

Ce circuit comprend une canalisation 26, de forte section, dont les deux extrémités débouchent dans l'isolateur, par des ouvertures en vis-à-vis placées de part et d'autre de la zone de travail dans laquelle se trouvent les pièces qui doivent être maintenues hors poussière.

Dans le cas représenté sur la figure où des disques de silicium sont introduits par le conteneur 20, traités ou contrôlés sur le plan de travail 16 voisin du dispositif de raccordement 22, puis évacués par le conteneur, cette zone de travail comprend le plan de de travail 16 et s'étend jusqu'au dispositif 22. Les ouvertures par lesquelles la canalisation 26 débouche dans l'isolateur sont alors placées à l'interieur de celui-ci, en face l'une de l'autre et de part et d'autre de cette zone de travail, les dimensions de ces ouvertures étant approximativement identiques et permettant d'effectuer un balayage laminaire de l'ensemble de la zone de travail.

L'extrémité de la canalisation 26 par laquelle l'air recyclé est admis dans l'isolateur est équipée d'un filtre particulaire à haute efficacité 28, de forte section, permettant d'injecter de l'air propre dans l'isolateur. Il est à noter que ce filtre 28 peut ne pas être placé à l'extrémité de la canalisation 26, mais en amont, hors de l'isolateur. Une grille est alors placée sur l'orifice d'entrée de l'air recyclé dans l'enceinte.

L'autre extrémité de la canalisation 26, par laquelle l'air est évacué de l'isolateur, est équipée l'une grille 30.

Le circuit d'épuration particulaire 24 comprend de plus un ventilateur 32 disposé dans la analisation 26. Ce ventilateur permet de recycler l'air contenu dans l'isolateur au travers du filtre 28, avec un débit relativement élevé, compris par exemple entre 40 et 200 m$^3$/heure pour un volume 14 d'environ 3 m$^3$.

En mettant en oeuvre le ventilateur 32 du circuit 24 avant l'utilisation de l'isolateur 10, on recycle rapidement et totalement l'air contenu dans ce dernier au travers du filtre 28, ce qui permet de fixer sur celui-ci les particules en suspension dans l'atmosphère contenue dans le volume clos 14.

De préférence, cette opération d'épuration particulaire préalable est facilitée par une réduction temporaire du volume interne de l'isolateur cette réduction est rendue possible en réalisant la paroi 12 en un matériau souple tel qu'une matière plastique souple et transparente (chlorure de polyvinyle par exemple). La déformation de cette paroi permet alors de réduire provisoirement le volume interne de l'isolateur, de sorte que l'épuration particulaire peut être réalisée plus rapidement.

Les particules fixées sur la paroi 12 de l'isolateur et sur le matériel présent à l'intérieur de celui-ci sont éliminées, lorsque l'épuration particulaire est terminée, par un lavage des surfaces correspondantes.

A cet effet, on utilise une technique de lavage en elle-même connue, consistant à passer un produit nettoyant tel que de l'alcool sur ces surfaces, puis à les rincer à l'eau distillée. Les surfaces concernées sont ensuite séchées.

Le lavage et le rinçage peuvent être effectués soit en noyant l'isolateur et les circuits attenants (le volume de l'isolateur étant dans ce cas de préférence réduit comme au cours du dépoussiérage), soit manuellement, à l'aide des moyens l'intervention constitués par exemple par le demi-scaphandre 18.

Le séchage peut aussi être effectué en partie manuellement à l'aide du demi-scaphandre 18. Il est achevé en effectuant un balayage du volume 14 grâce au circuit 24.

Lorsque l'épuration particulaire et le lavage sont terminés, l'installation est prête à être utilisée.

Au cours de cette utilisation, il peut être nécessaire de faire entrer de l'air neuf à l'intérieur de l'isolateur, notamment pour tenir compte des variations du volume interne 14 dues à l'intervention de l'opérateur par l'intermédiaire du demi-scaphandre 18. Conformément à l'invention, l'admission d'air neuf reste cependant limitée à un débit aussi faible que possible afin de réduire au minimum le nombre de particules admises dans le volume clos 14, pour une qualité de filtration donnée de l'air en provenance de l'extérieur.

Selon l'invention, cette fonction est remplie par un circuit ouvert 34 d'admission d'air neuf comportant une conduite d'entrée 36 faisant communiquer l'extérieur avec le volum clos 14 et une conduite de sortie 38 par laquelle le volume clos 14 communique avec l'extérieur.

La conduite d'entrée 36 est équipée de deux filtres particulaires 40 à haute efficacité placés en série, et d'un ventilateur 42 à faible débit, de préférence réglable entre 0 et 20 m$^3$/heure. Comme on l'a indiqué précédemment, la valeur du débit imposée par le ventilateur 42 est choisie de façon à être aussi faible que possible, compte tenu des conditions inhérentes au poste de travail auquel correspond l'installation.

Il est à noter que la présence des deux filtres 40 en série est facilitée par la faiblesse du débit à obtenir à l'aide du circuit 34. On a déjà indiqué que les installations connues à flux laminaire exigent un débit très élevé qui rend difficile l'utilisation de deux filtres en série, compte tenu de la perte de charge de chacun des filtres.

La conduite de sortie 38 est équipée d'un filtre 44 à haute efficacité, qui joue en quelque sorte le rôle d'un clapet anti-retour, en cas de panne du ventilateur 42. De plus, ce filtre 44 assure, de par sa perte de charge, la permanence d'une légère surpression dans l'isolateur.

Bien que tes conduites 36 et 38 du circuit ouvert 34 soient représentées sur la figure comme débouchant directement dans l'isolateur 10, on comprendra qu'elles peuvent aussi déboucher dans la conduite 26 du circuit fermé 24, qui communique avec l'isolateur.

4

Certaines particules restées fixées sur les parois de l'isolateur ou de l'appareillage malgré le lavage peuvent être libérées en cours de travail, par exemple sous l'effet d'un frottement. De plus, les conditions physico-chimiques à l'intérieur de l'isolateur peuvent évoluer, par exemple sous l'effet d'une augmentation de température ou d'une émission de gaz ou de vapeurs.

Pour balayer les particules ou autres poussières ainsi libérées et pour modifier les conditions physico-chimiques notamment dans la zone de travail, il est proposé de maintenir en fonctionnement en cours de travail, au moins à certains moments, le ventilateur 32 du circuit fermé d'épuration particulaire 24. Les conditions physico-chimiques sont modifiées en plaçant dans ce circuit 24 un dispositif de traitement atmosphérique dont les éléments constitutifs sont choisis en fonction des conditions physico-chimiques qui sont susceptibles de varier au poste de travail considéré.

Il est à noter que le maintien en fonctionnement du circuit 24 en cours de travail ne risque pas d'introduire des particules supplémentaires dans le volume clos 14, puisque ce circuit est un circuit fermé alimenté par l'air préalablement dépoussiéré contenu dans l'isolateur.

Lorsque le conteneur 20 est raccordé sur la paroi 12 de l'isolateur et mis en communication avec le volume clos 14 par ouverture de la double porte du dispositif 22, il ne faut pas que des poussières soient présentes dans le conteneur, car on introduirait ainsi des poussières dans la zone de travail.

Afin de supprimer ce risque, on associe conformément à l'invention un circuit fermé d'épuration particulaire 48 au conteneur 20. Ce circuit 48 est mis en oeuvre avant que le conteneur ne soit mis en communication avec le volume clos 14.

Ce circuit 48 est comparable dans son principe au circuit 24 assurant l'épuration particulaire de l'isolateur 10. Il comprend une canalisation 50 dont les deux extrémités débouchent sur deux parties en vis-à-vis de la paroi du conteneur, respectivement au travers d'un filtre 52 à haute efficacité et d'une grille 54. Le recyclage est assuré par un ventilateur 56 dans des conditions équivalentes à celles réalisées par le circuit 24 pour l'isolateur 10.

Comme l'isolateur 10, le conteneur 20 est maintenu en légère surpression. Cela peut être réalisé une fois pour toutes ou en associant au circuit fermé 48 un circuit ouvert (non représenté), comparable au circuit 34 équipant l'isolateur.

L'installation qui vient d'être décrite permet de travailler hors poussière, dans des conditions correspondant au minimum à la classe 10 telle qu'elle a été définie précédemment. Cette installation permet notamment la fabrication et le contrôle des composants électroniques tels que les microprocesseurs avec un rebut nettement inférieur à celui qui est obtenu avec les installations existantes. De plus, la réalisation de composants plus performants, présentant un nombre de contacts accru peut être envisagée favorablement.

**Revendications**

1. Installation pour travaux hors poussière comprenant:
- un isolateur étanche (10) dont la paroi (12) enferme un volume clos de travail (14) et comportant des moyens d'intervention (18) à l'intérieur dudit volume sans rupture de ladite paroi;
- au moins un conteneur étanche (20) distinct de l'isolateur et pouvant être raccordé et mis en communication avec ce dernier au moyen d'un dispositif de transfert étanche (22), afin d'introduire et d'extraire de l'isolateur des produits et matériels; caractérisée en ce que qu'elle comprend:
- un circuit fermé (24) d'épuration particulaire de l'isolateur débouchant dans ce dernier et comportant des moyens de ventilation (32) à fort débit et des moyens de filtrage (28);
- un circuit fermé (48) d'épuration particulaire du conteneur débouchant dans ce dernier et comportant des moyens de ventilation (56) et des moyens de filtrage (52);
- un circuit ouvert (34) d'admission d'air neuf dans l'isolateur, comportant une conduite d'entrée (36) équipée de moyens de ventilation (42) à faible débit et de moyens de filtration (40) et une conduite de sortie (38) équipée de moyens de filtration (44), les conduites d'entrée et de sortie communiquant à la fois avec l'isolateur et avec l'extérieur.

2. Installation selon la revendication 1, caractérisée en ce que le circuit fermé (24) d'épuration particulaire de l'isolateur débouche dans ce dernier par deux ouvertures en vis-à-vis placées de part et l'autre d'une zone de travail interne audit volume clos (14), ces deux ouvertures ayant une section approximativement identique assurant un balayage laminaire de ladite zone de travail.

3. Installation selon l'une quelconque des revendications 1 et 2, caractérisée en ce que les moyens de ventilation (42) équipant la conduite d'entrée (36) du circuit d'admission d'air neuf dans l'isolateur sont à débit variable au plus égal à 20 m$^3$/heure.

4. Installation selon l'une quelconque des revendications 1 à 3, caractérisée en ce que les moyens de filtration équipant la conduite d'entrée (36) du circuit d'admission d'air neuf dans l'isolateur comprennent deux filtres (40) à haute efficacité montés en série.

5. Installation selon l'une quelconque des revendications 1 à 4, caractérisée en ce que les moyens de filtration équipant le circuit fermé (24) d'épuration particulaire de l'isolateur comprennent un filtre (28) à haute efficacité de forte section placé dans une partie de ce circuit qui débouche dans l'isolateur, en aval des moyens de ventilation (32) équipant ce circuit.

6. Installation selon l'une quelconque des revendications 1 à 5, caractérisée en ce que le circuit fermé (24) d'épuration particulaire de l'isolateur comprend de plus des moyens de traitement (46) de l'atmosphère contenue dans le volume clos (14) enfermé dans l'isolateur.

7. Installation selon l'une quelconque des revendications 1 à 6, caractérisée en ce que la paroi (12) de l'isolateur est souple et peut être déformée afin de réduire le volume clos de travail lors de la mise en oeuvre du circuit fermé (24) de dépoussiérage de l'isolateur.

8. Procédé de mise en oeuvre d'une installation selon l'une quelconque des revendications 1 à 6, caractérisé en ce qu'il comprend les étapes successives suivantes:

- épuration particulaire rapide du volume los de travail (14) enfermé dans l'isolateur par l'actionnement des moyens de ventilation (32) à fort débit équipant le circuit fermé d'épuration particulaire de l'isolateur, assurant la fixation des poussières contenues dans ledit volume sur les moyens de filtration (28) équipant ce circuit;

- lavage des surfaces internes des parois de l'isolateur et des surfaces des matériels contenus dans ce dernier;

- exécution des travaux à réaliser à l'intérieur de l'isolateur, avec ventilation de celui-ci par l'actionnement des moyens de ventilation (42) à faible débit équipant le circuit ouvert (34) d'admission d'air neuf.

9. Procédé selon la revendication 8, caractérisé en ce que l'épuration particulaire rapide du volume clos de travail enfermé dans l'isolateur est effectuée après réduction de ce volume par déformation de la paroi (12) de l'isolateur.

10. Procédé selon l'une quelconque des revendications 8 et 9, caractérisé en ce qu'on continue à actionner les moyens de ventilation (32) à fort débit équipant le circuit fermé (24) d'épuration particulaire de l'isolateur pendant l'exécution des travaux à réaliser.

11. Procédé selon l'une quelconque des revendications 8 à 10, caractérisé en ce que l'on introduit et l'on extrait des produits et des matériels de l'isolateur en raccordant et en mettant en communication avec ce dernier un conteneur (20), après avoir effectué une épuration particulaire de celui-ci par l'actionnement des moyens de ventilation (56) équipant le circuit fermé (48) d'épuration particulaire du conteneur.


**Patentansprüche**

1. Anlage für staubfreies Arbeiten, mit einer dichten Isolierkammer (10), deren Wandung (12) einen geschlossenen Arbeitsraum (14) umschließt, und welche eine Einrichtung (18) für den Eingriff ins Innere des Raums ohne Unterbrechung der Wandung aufweist, und mit wenigstens einem von der Isolierkammer getrennten, dichten Behälter (20), welcher für den Eintrag und Austrag von Produkten und Werkstoffen in die bzw. aus der Isolierkammer über eine dichte Überführungseinrichtung (22) mit der Isolierkammer verbindbar und in Strömungsverbindung versetzbar ist, gekennzeichnet durch einen der Isolierkammer zugeordneten geschlossenen Entstaubungskreis (24), welcher in der Isolierkammer ausmündet und eine Umwälzeinrichtung (32) hoher Förderleistung sowie eine Filtereinrichtung (28) aufweist, durch einen dem Behälter zugeordneten geschlossenen Entstaubungskreis (48), welcher im Behälter ausmündet und eine Umwälzeinrichtung (56) sowie eine Filtereinrichtung (52) aufweist, und

durch einen offenen Kreis (34) für die Zufuhr von Frischluft zur Isolierkammer, mit einer Eintrittsleitung (36), welche mit einer Umwälzeinrichtung (42) niedriger Förderleistung und einer Filtereinrichtung (40) versehen ist, und einer Austrittsleitung (38), welche mit einer Filtereinrichtung (44) versehen ist, wobei die Eintritts- sowie die Austrittsleitung jeweils mit der Isolierkammer und mit der freien Umgebung in Strömungsverbindung stehen.

2. Anlage nach Anspruch 1, dadurch gekennzeichnet, daß der der Isolierkammer zugeordnete geschlossen Entstaubungskreis (24) über zwei einander gegenüber beiderseits eines im geschlossenen Arbeitsraum (14) vorhandenen Arbeitsplatzes angeordnete Öffnungen in der Isolierkammer ausmündet, wobei die beiden Öffnungen einen nahezu identischen Querschnitt haben, welcher das Bestreichen des Arbeitsplatzes mit einer laminaren Strömung gewährleistet.

3. Anlage nach einem der Ansprüche 1 und 2, dadurch gekennzeichnet, daß die in der Eintrittsleitung (36) des Kreises für die Zufuhr von Frischluft zur Isolierkammer angeordnete Umwälzeinrichtung (42) eine variable Förderleistung von höchstens 20 m³/h hat.

4. Anlage nach wenigstens einem der Ansprüche 1 bis 3, dadurch gekennzeichnet, daß die in der Eintrittsleitung (36) des Kreises für die Zufuhr von Frischluft zur Isolierkammer angeordnete Filtereinrichtung zwei in Reihe angeordnete Hochleistungsfilter (40) aufweist.

5. Anlage nach einem der Ansprüche 1 bis 4, dadurch gekennzeichnet, daß die in dem der Isolierkammer zugeordneten geschlossenen Entstaubungskreis (24) angeordnete Filtereinrichtung ein einen großen Querschnitt aufweisendes Hochleistungsfilter (28) aufweist, welches an der Abströmseite der in diesem Kreis vorhandenen Umwälzeinrichtung (32) in einem in der Isolierkammer ausmündenden Abschnitt des Kreises angeordnet ist.

6. Anlage nach einem der Ansprüche 1 bis 5, dadurch gekennzeichnet, daß der der Isolierkammer zugeordnete geschlossene Entstaubungskreis (24) ferner eine Einrichtung (46) für die Aufbereitung der in dem in der Isolierkammer eingeschlossenen Arbeitsraum (14) enthaltenen Atmosphäre aufweist.

7. Anlage nach einem der Ansprüche 1 bis 6, dadurch gekennzeichnet, daß die Wandung (12) der

## 0 195 703

Isolierkammer nachgiebig ist und bei Inbetriebnahme des geschlossenen Kreises (24) für die Entstaubung der Isolierkammer zur Verkleinerung des geschlossenen Arbeitsraums verformbar ist.

8. Verfahren für den Betrieb einer Anlage nach einem der Ansprüche 1 bis 6, dadurch gekennzeichnet, daß es die nachstehenden aufeinander folgenden Schritte umfaßt:

- Schnellentstaubung des in der Isolierkammer eingeschlossenen Arbeitsraums (14) durch Inbetriebnahme der in dem der Isolierkammer zugeordneten geschlossenen Entstaubungskreis angeordneten Umwälzeinrichtung (32) hoher Förderleistung unter Fixierung von im Arbeitsraum enthaltenem Staub durch die in dem genannten Kreis angeordnete Filtereinrichtung (28),

- Spülung der Innenflächen der Wandungen der Isolierkammer und der Oberflächen von in der Letzteren vorhandenem Material, und

- Ausführung von im Inneren der Isolierkammer vorzunehmenden Arbeiten unter Belüftung derselben durch Inbetriebnahme der in dem offenen Kreis (34) für die Zufuhr von Frischluft vorgesehenen Umwälzeinrichtung (42) niedriger Förderleistung.

9. Verfahren nach Anspruch 8, dadurch gekennzeichnet, daß die Schnellentstaubung des von der Isolierkammer umschlossenen geschlossenen Arbeitsraums nach Verkleinerung desselben durch Verformung der Wandung (12) der Isolierkammer erfolgt.

10. Verfahren nach einem der Ansprüche 8 und 9, dadurch gekennzeichnet, daß die in dem der Isolierkammer zugeordneten geschlossenen Entstaubungskreis (24) vorhandene Umwälzeinrichtung (32) hoher Förderleistung während der Durchführung der auszuführenden Arbeiten in Betrieb gehalten wird.

11. Verfahren nach einem der Ansprüche 8 bis 10, dadurch gekennzeichnet, daß Produkte und Werkstoffe in die bzw. aus der Isolierkammer ein- und ausgetragen werden, indem ein Behälter (20) mit dieser verbunden und in Strömungsverbindung versetzt wird, nachdem er zuvor durch Inbetriebnahme der in dem dem Behälter zugeordneten geschlossenen Entstaubungskreis (48) vorgesehenen Umwälzeinrichtung (56) entstaubt wurde.

## Claims

1. Installation for dust-free working, comprising a tight isolator (10), whose wall (12) encloses a closed working volume (14) and having means (15) for intervening within said volume without breaking said wall; at least one tight container (20) separate from the isolator and which can be connected and linked with the latter by a tight transfer device (22), in order to introduce and extract with respect to the isolator products and equipment; characterized in that it comprises a closed circuit (24) for particulate purification of the isolator issuing into the latter and having high flow rate ventilation means (32) and filtering means (28); a closed circuit (48) for the particulate purification of the container issuing into the latter and having ventilation means (56) and filtering means (52); an open circuit (34) for the admission of fresh air into the isolator having an intake pipe (36) equipped with low flow rate ventilation means (42) and filtration means (40) and a discharge pipe (38) equipped with filtration means (44), the intake and discharge pipes communicating both with the isolator and with the exterior.

2. Installation according to claim 1, characterized in that the closed particulate purification circuit (24) of the isolator issues into the latter by two facing openings positioned on either side of a work zone within the closed volume (14), said two openings having an approximately identical cross-section ensuring a laminar scavenging of said work zone.

3. Installation according to either of the claims 1 and 2, characterized in that the ventilation means (42) equipping the intake pipe (36) of the circuit for admitting fresh air into the isolator have a variable flow rate at the most equal to 20 m3/hour.

4. Installation according to any one of the claims 1 to 3, characterized in that the filtration means equipping the intake pipe (36) of the circuit for admitting fresh air into the isolator comprise two series-connected high efficiency filters (40).

5. Installation according to any one of the claims 1 to 4, characterized in that the filtration means equipping the closed particulate purification circuit (24) of the isolator comprise a high efficiency filter (28) with a large cross-section placed in part of said circuit issuing into the isolator, downstream of the ventilation means (32) equipping said circuit.

6. Installation according to any one of the claims 1 to 5, characterized in that the closed particulate purification circuit (24) of the isolator also comprises means (46) for treating the atmosphere contained in the closed volume (14) enclosed in the isolator.

7. Installation according to any one of the claims 1 to 6, characterized in that the isolator wall (12) is flexible and can be deformed in order to reduce the closed working volume when putting into operation the closed dust-extraction circuit (24) of the isolator.

8. Process for operating an installation according to any one of the claims 1 to 6, characterized in that it comprises the successive stages of a fast particulate purification of the closed working volume (14) enclosed in the isolator by actuating high flow rate ventilation means (32) equipping the closed particulate purification circuit of the isolator, ensuring the fixing of the dust contained in said volume to the filtration means (28) equipping said circuit; washing the internal surfaces of the isolator walls and the surfaces of equipment contained in the latter; performing the work tasks to be performed within the isolator, with ventilation thereof

7

**0 195 703**

by actuating low flow rate ventilation means (42) equipping the open fresh air admission circuit (34).

9. Process according to claim 8, characterized in that the fast particulate purification of the closed working volume enclosed within the isolator is carried out after reducing said volume by deforming the isolator wall (12).

10. Process according to any one of the claims 8 and 9, characterized in that the high flow rate ventilation means (32) equipping the closed particulate purification circuit (24) of the isolator are operated throughout the performance of the work tasks.

11. Process according to any one of the claims 8 to 10, characterized in that products and equipment are introduced into and extracted from the isolator by connecting and linking with the latter a container (20), after carrying out a particulate purification thereof by actuating the ventilation means equipping the closed particulate purification circuit (48) of the container.

8